# FASCICULE DE BREVET EUROPEEN

(11) **EP 4 399 373 B1**
(45) Date de publication et mention de la délivrance du brevet: **06.08.2025**
(21) Numéro de dépôt: 22773710.3
(22) Date de dépôt: 08.09.2022
(51) Int. Cl.: E04B 1/32, E04B 2/88, F24S 20/61

(54) **BÂTIMENT À ARCHITECTURE HÉLIODYNAMIQUE**
ARCHITEKTUR DER HELIODYNAMIK
BUILDING WITH HELIODYNAMIC ARCHITECTURE

(30) Priorité: 09.09.2021 FR 2109431
(43) Date de publication de la demande: 17.07.2024
(73) Titulaire: ALCER, 67250 Soultz-sous-Forêts (FR)
(72) Inventeur: WASSER, Eric, 67310 Cosswiller (FR)
(74) Mandataire: Ipsilon Strasbourg
(86) Numéro de dépôt international: PCT/EP2022/074970
(87) Numéro de publication internationale: WO 2023/036866

(56) Documents cités:
- EP-A1- 2 444 559

## Description

La présente invention concerne le domaine de la conception et de la construction des immeubles et bâtiments, notamment à des fins d'habitation ou recevant du public, dont l'architecture est optimisée par rapport au rayonnement solaire, ce tout au long de l'année. L'invention a plus particulièrement pour objet un bâtiment comprenant au moins une portion ou partie de façade, avantageusement sensiblement une façade entière déterminée, transparente aux rayons du soleil, plus particulièrement un bâtiment dont au moins une façade présente une architecture héliodynamique.

De nombreuses réalisations d'immeuble ou de bâtiment construites en accord avec le mouvement du soleil et destinées à exploiter au maximum l'ensoleillement direct en hiver, et à y être exposé un minimum en été, sont déjà connues.

Ainsi, l'inventeur a conçu et réalisé concrètement une construction solaire dénommée « Héliodome » et décrite dans le document FR 2 819 836.

Cette construction permet une prise en compte maximale du rayonnement solaire, mais présente une forme extérieure très typée (tronc de cône à grand angle au sommet), une architecture complexe et un espace intérieur relativement réduit par rapport à l'encombrement spatial de la construction et dont l'habitabilité n'est pas optimale, du fait de volumes dont l'exploitation est délicate.

Par l'évolution décrite dans le document EP 2 444 559, et en vue de tenter de surmonter les limitations précitées, il a été proposé d'intégrer la forme particulière de l'« Héliodome », ou d'une fraction au moins de cette dernière, dans une construction de forme plus classique pour disposer de volumes intérieurs plus facilement exploitables et pour en faciliter la réalisation. Dans cette évolution, la construction résultante comporte une façade transparente harmonisée avec le mouvement de la Terre. Toutefois, ce faisant, et comme le montrent les solutions constructives proposées dans ce document, il y a lieu de trouver un compromis entre les performances en termes d'exploitation contrôlée du rayonnement solaire et la taille relative de la partie spécifique « Héliodome ».

Par exploitation contrôlée, il faut comprendre dans la présente non seulement la contribution positive de la partie « Héliodome » en terme d'éclairage et de chauffage direct par le soleil durant les périodes de faible/court éclairement solaire local, mais également la propriété à limiter notablement la part de l'éclairement solaire direct reçu dans le volume interne du bâtiment à travers cette partie spécifique, et donc à garantir le maintien d'une fraîcheur relative durant les périodes de fort/long ensoleillement local. Avec le réchauffement climatique, cette seconde propriété est d'ailleurs devenue une demande prioritaire.

En outre, en cas de compromis acceptable d'un point de vue apparence et habitabilité, la contribution de la partie spécifique « Héliodome » au chauffage et à l'éclairage du bâtiment, en particulier en hiver, est forcément restreinte car son extension surfacique sera nécessairement relativement limitée. A l'inverse, pour pouvoir disposer d'une bonne luminosité à l'intérieur du bâtiment par le rayonnement solaire traversant la partie « Héliodome », cette dernière doit être étendue, ce qui l'expose à nouveau à un risque de limitation insuffisante du rayonnement solaire en périodes d'exposition importante, sauf à respecter scrupuleusement les formes divulguées par les documents FR et EP précitées, et donc à revenir à des formes architecturalement et constructivement limitées, et donc non applicables à des constructions plus conventionnelles et à l'habitat collectif.

La présente invention a pour but de proposer une solution répondant à la demande ci-dessus et de surmonter les limitations des solutions connues précitées.

A cet effet, l'invention propose un bâtiment, notamment bâtiment d'habitation ou recevant du public, selon la revendication 1.

Ainsi, l'invention repose sur la découverte inattendue et surprenante faite par l'inventeur qu'il est aussi possible d'exploiter, pour un point fixe donné, aussi le cône ou partie du cône (tronc de cône) opposé ou négatif (dans la pratique généralement une partie angulairement limitée de ce tronc de cône concave), situé sous le plan horizontal contenant ledit point fixe, ce de manière équivalente au tronc de cône positif ou bombé, qui est situé au-dessus dudit plan horizontal, est issu du même point fixe et est exploité dans les documents précités de l'état de la technique. Dans le premier cas (tronc de cône concave ou rentrant), le point fixe virtuel sera situé au-dessus de l'arête sommitale de la portion de façade concernée et dans le second cas (tronc de cône convexe ou bombé) ledit point fixe virtuel est situé en-dessous de la ligne de base de la façade concernée.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1A],
[Fig. 1B],
[Fig. 1C] et

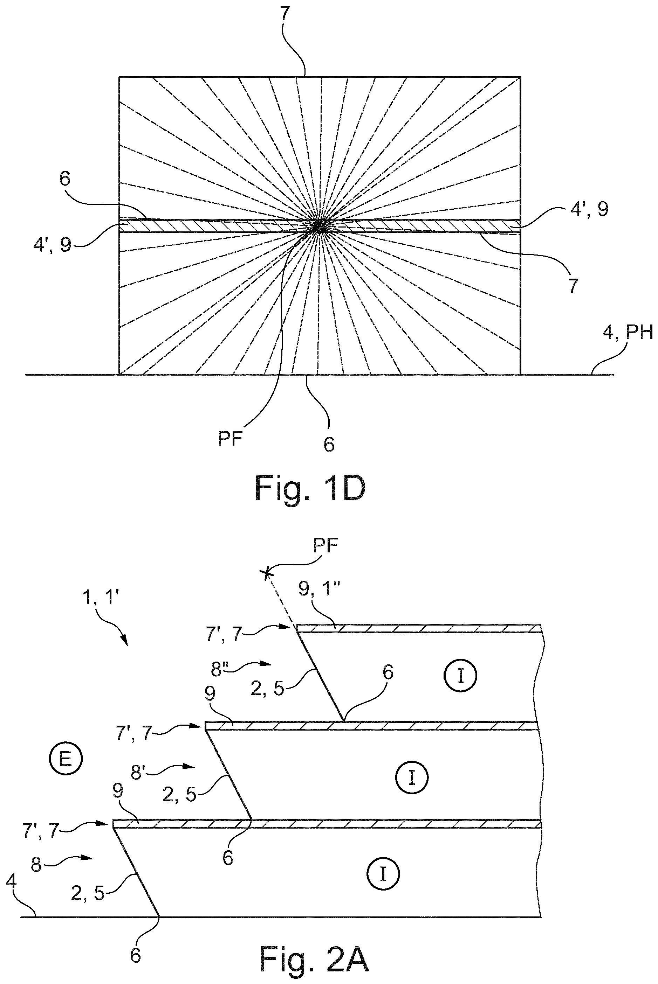

[Fig. 1D] sont des vues schématiques, respectivement en perspective (1A - perspective non déformante), de dessus (1B), en élévation latérale (et en coupe selon un plan vertical contenant le point fixe et perpendiculaire à la façade - 1C) et en élévation frontale (1D), d'une portion de façade d'un bâtiment selon un mode de réalisation de l'invention, comprenant une portion de façade en creux (en bas) et une portion de façade bombée (en haut), lesquelles sont mutuellement superposées et épousent partiellement des surfaces de cônes qui ont le même point fixe (situé dans le plan horizontal délimitant les deux portions de façades) et sont symétriques par rapport à ce dernier (sur la figure 1D la portion de façade repose au sol) ;
[Fig. 2A] et
[Fig. 2B] sont des vues en coupe schématiques partielles de deux variantes de réalisation d'un bâtiment en accord avec l'invention, respectivement à trois et à quatre niveaux ou étages ;
[Fig. 3A],
[Fig. 3B],

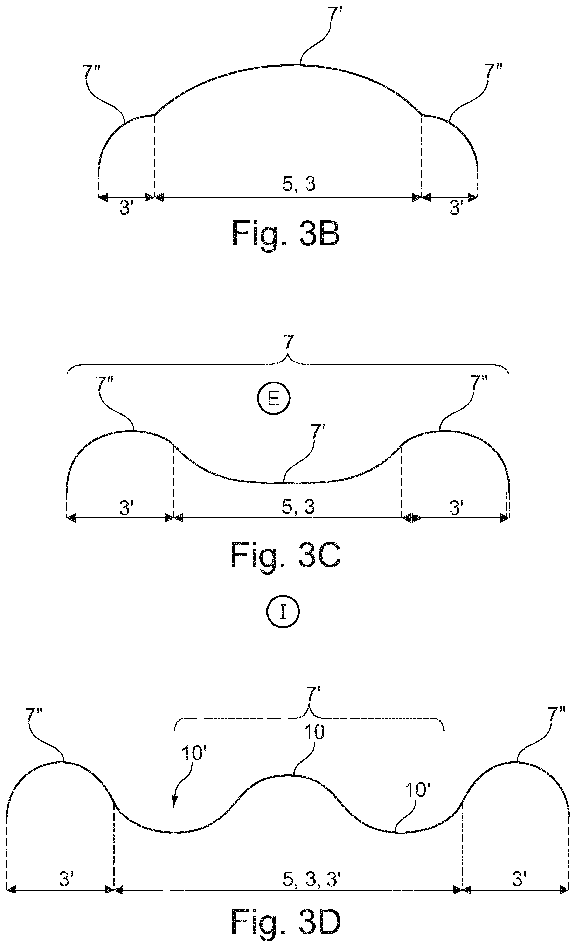

[Fig. 3C] et
[Fig. 3D] sont des représentations schématiques, en vue de dessus, de différentes formes d'arêtes sommitales correspondant à différentes configurations constructives de bâtiments et de façades transparentes au rayonnement solaire en accord avec l'invention ;
[Fig. 4A],
[Fig. 4B],

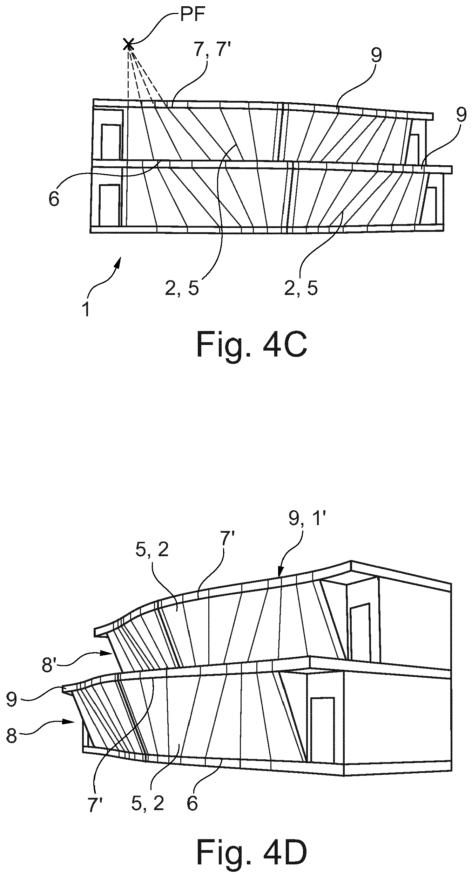

[Fig. 4C] et
[Fig. 4D] sont des vues en perspective selon différentes directions d'un bâtiment à deux étages en accord avec l'invention et présentant des arêtes sommitales similaires à celles de la figure 3B (le cas échéant seule la partie du bâtiment correspondant à la partie centrale de la façade transparente étant représentée) ;
[Fig. 5A],
[Fig. 5B],

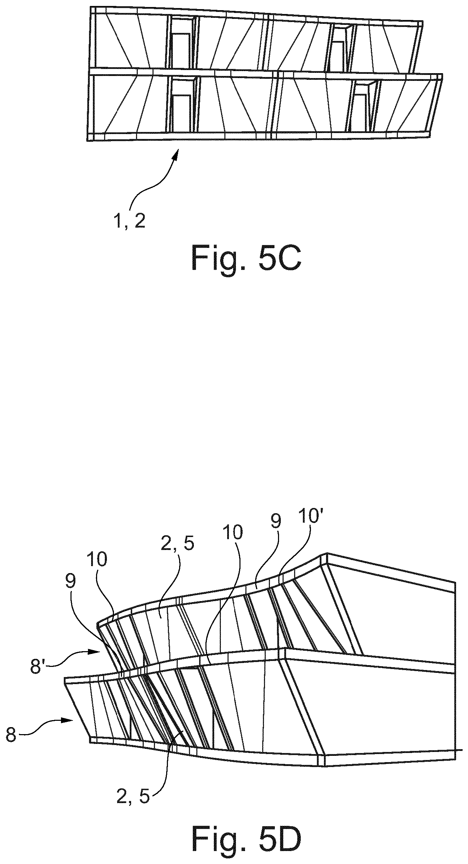

[Fig. 5C] et
[Fig. 5D] sont des vues en perspective selon différentes directions d'un bâtiment à deux étages en accord avec l'invention et présentant d'autres formes d'arêtes sommitales mutuellement dissemblables (le cas échéant seule la partie du bâtiment correspondant à la partie centrale de la façade transparente étant représentée) ;

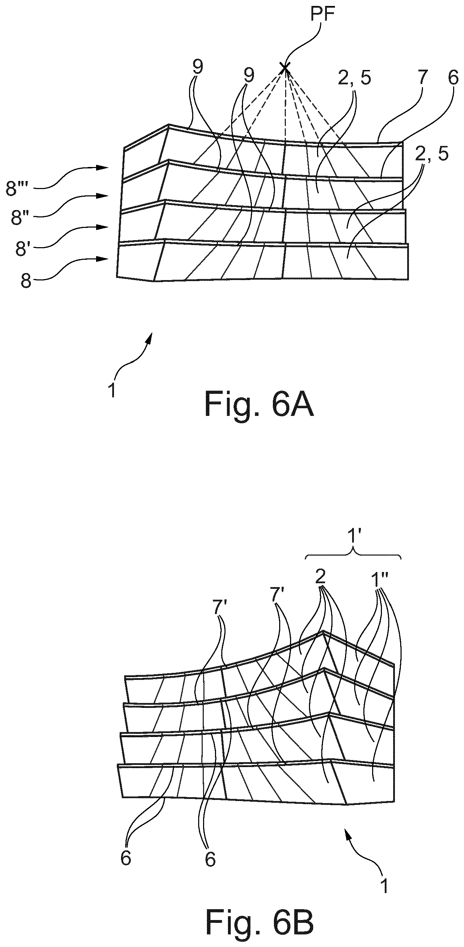

[Fig. 6A] et

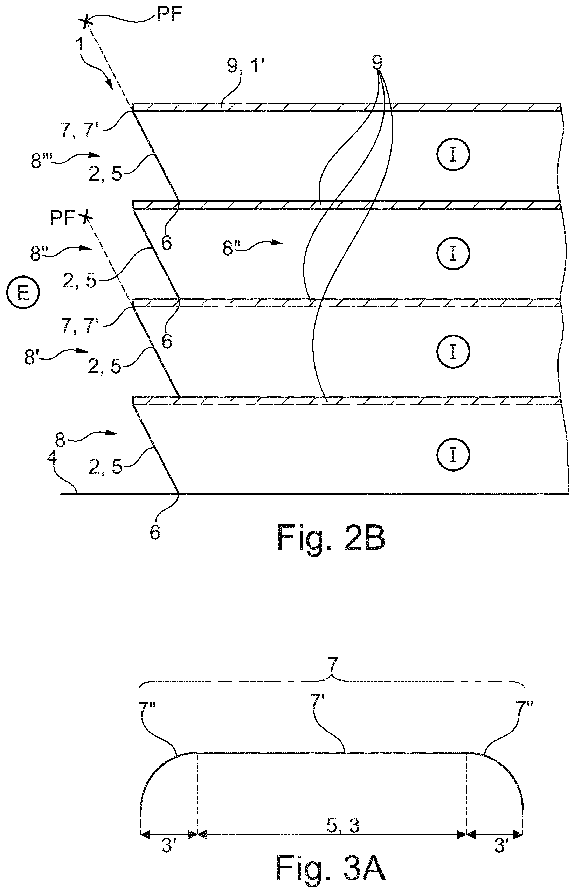

[Fig. 6B] sont des vues partielles en perspective d'un bâtiment à quatre étages en accord avec l'invention, présentant une arête sommitale similaire à celle de la figure 3C et une structure similaire à celle de la figure 2B, seule la partie du bâtiment correspondant à la partie centrale de la façade transparente étant représentée, et,

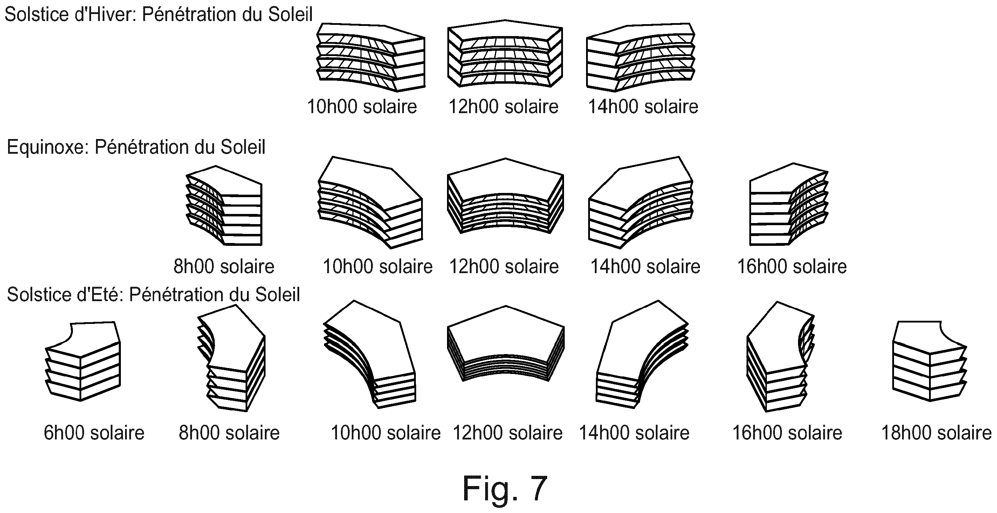

[Fig. 7] illustre sous forme d'imagettes la pénétration du soleil dans un bâtiment tel que représenté figures 6A et 6B, lors de certaines journées particulières de l'année et à certaines heures (implantation en hémisphère nord - les parties de façade éclairées sont de couleur blanche ou claire et les parties de façade à l'ombre sont grisées).

L'invention concerne un bâtiment (1), notamment bâtiment d'habitation ou recevant du public, dont l'enveloppe (1') comprend au moins une portion de façade (2), préférentiellement une façade entière, qui délimite un extérieur (E) et un intérieur (I), qui est transparente au rayonnement solaire, sensiblement sur toute sa surface, et qui est située sur une face (2') dudit bâtiment (1) orientée du côté sud lorsque ledit bâtiment est localisé dans l'hémisphère nord et inversement orientée du côté nord dudit bâtiment (1) lorsque ce dernier est localisé dans l'hémisphère sud. La forme d'au moins une partie (3, 3') de ladite au moins une portion de façade (2) s'inscrit sensiblement dans la surface conique générée par un segment imaginaire s'étendant entre le Soleil et un point (PF) correspondant qui est fixe par rapport à la Terre, lors d'un tour complet de la Terre sur elle-même.

Ladite ou chaque portion de façade (2) s'étend entre une ligne de base (6) et une ligne ou arête (7) sommitale qui ensemble la délimitent par rapport à la partie restante (1") de l'enveloppe (1') du bâtiment (1), cette partie restante (1") étant majoritairement ou totalement opaque. Cette partie restante (1") peut être formée par un toit qui s'étend jusqu'au sol (S), par un toit associé à des murs extérieurs porteurs, ou encore par un toit ou une dalle (9) supérieure et des murs latéraux dans le cas d'immeubles à plusieurs étages.

Conformément à l'invention, ledit bâtiment (1) est caractérisé en ce que la face extérieure de ladite ou de chaque partie (3, 3') précitée de portion de façade ou façade (2) s'inscrit approximativement dans la surface d'une partie d'un tronc de cône, faisant partie de la surface conique générée par le segment imaginaire précité et dont le sommet imaginaire est le point fixe (PF) associé, en ce que la face extérieure de chaque partie (3, 3') précitée de la portion de façade (2) est, en chaque point de l'arête sommitale (7), située en retrait et inclinée vers l'intérieur (I) par rapport à une droite perpendiculaire au plan horizontal (PH) local, c'est-à-dire une droite normalement perpendiculaire au plan du sol (4), et passant par ce point de l'arête sommitale (7), et en ce que l'une (3) au moins des parties de façade précitées (3, 3') s'inscrit dans la surface d'une partie de tronc de cône précitée qui est en creux ou concave par rapport à la face considérée (2') vue depuis l'extérieur (E). Par « partie de tronc de cône », on entend concrètement dans la présente une surface incurvée en forme de bande s'étendant sur une fraction angulaire d'un tronc de cône, comme le montrent les figures 2 à 7.

La portion de façade (2) peut éventuellement, selon un premier mode de réalisation, n'être composée que de parties de façade en creux (3), comme le montrent les figures 2, 6 et 7. Dans ce mode de réalisation, le point fixe de chaque portion de façade se situe en hauteur (point virtuel) et la bande de surface tronconique en creux exploitée peut être bénéfiquement exploitée pour une construction en étages superposés. En variante, une ou plusieurs zone(s) partielle(s) seulement de cette portion de façade ou façade entière est(sont) constituée(s) par une ou de telle(s) partie(s) de façade en creux (3) de forme tronconique rentrante (de l'extérieur vers l'intérieur).

Dans ce cas (partie de tronc de cône concave ou rentrant), le point fixe virtuel (PF) de la ou chaque partie de façade en creux est situé au-dessus de l'arête sommitale (7) de la portion de façade concernée (voir figues 2A, 2B, 4A, 4C et 6A sur lesquelles ledit point fixe virtuel (PF) associé à la portion de façade concernée est visible, ainsi que partiellement le cône dont une partie en forme de bande constitue le tronc de cône dans lequel s'inscrit la partie de façade correspondante).

On peut également relever que dans cette configuration, la façade vitrée (2) inclinée vers l'extérieur de bas en haut, reflète le sol et non le ciel ou l'horizon et rend par conséquent une image qui correspond visuellement à un obstacle matériel. Cette propriété accessoire intéressante permet d'éviter que les oiseaux ne percutent ladite façade vitrée.

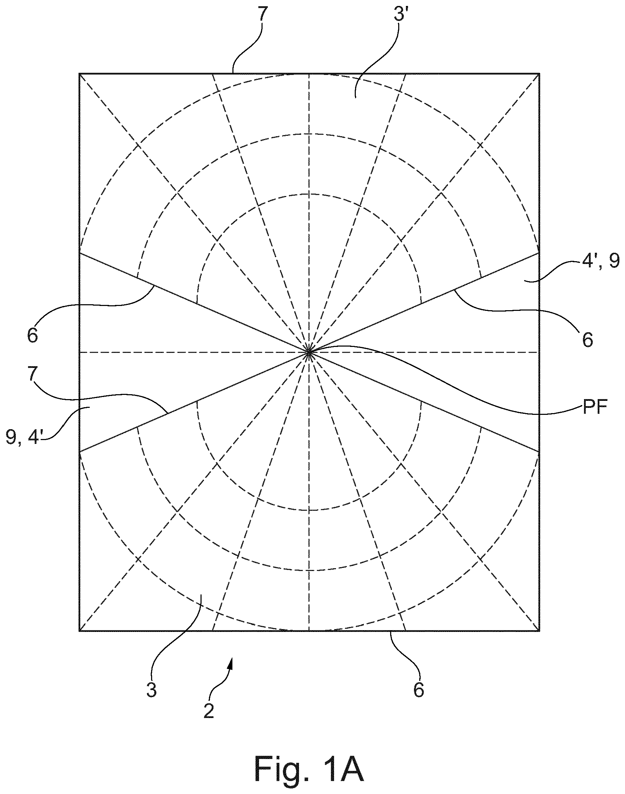

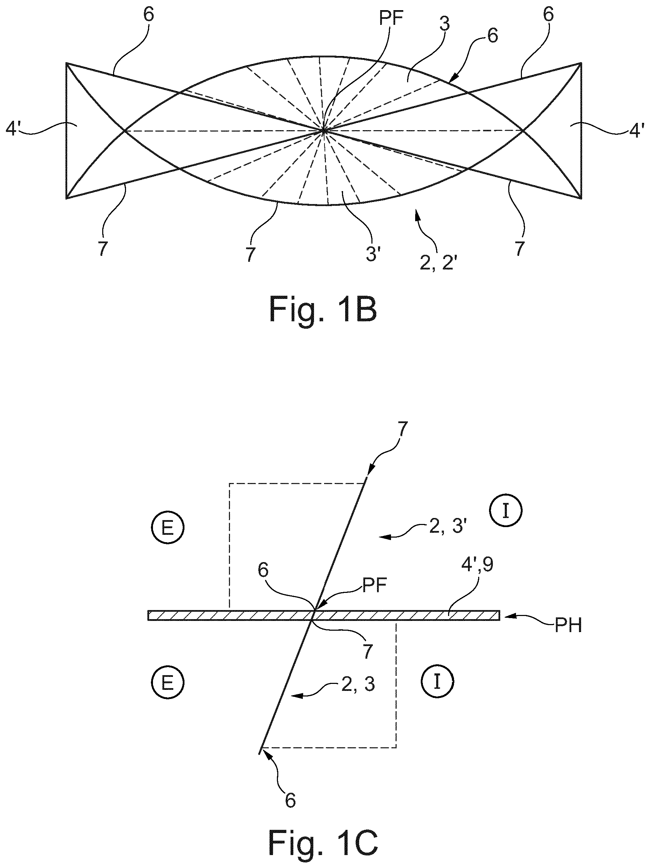

Selon un deuxième mode de réalisation, ressortant par exemple des figures 1 et 3 à 5, au moins une autre (3') des parties de façade précitées (3, 3') s'inscrit dans la surface d'une partie de tronc de cône bombée ou convexe par rapport à la face considérée (2'). Dans ce cas (tronc de cône convexe ou bombé), ledit point fixe virtuel de la ou chaque partie de façade (3') est situé en-dessous de la ligne de base (6) de la façade concernée.

Dans les deux modes de réalisation, il est possible de profiter d'une grande luminosité en été comme en hiver. Toutefois, grâce aux formes spécifiques exploitées, l'ensoleillement sera avantageusement rasant en été (au niveau de la portion de façade vitrée), avec maintien à l'ombre du volume intérieur (fraîcheur en été).

Ainsi, les façades ou portions de façades visées par l'invention, correspondent à des expressions tridimensionnelles surfaciques des tangentes des trajectoires du soleil. Ces expressions géométriques peuvent s'exprimer positivement (espace, forme bombée) ou négativement (contre-espace, forme creuse) par rapport à un plan de façade vertical. Ainsi, l'invention fournit, en combinant les deux approches, des façades sculptées par le soleil, en s'accordant à ses trajectoires respectivement estivales et hivernales. On peut relever notamment que la ligne de coucher du soleil le jour de l'été correspond à la ligne de levée du soleil le jour de l'hiver, et vice-versa, avec des formes de cônes et de troncs de cônes générées par les trajectoires du soleil respectivement effectuées le jour de l'été (limitation des apports en été) et le jour de l'hiver (maximisation des apports en hiver).

En particulier, les portions de façades tronconiques en creux spécifiquement proposées par l'invention permettent, à l'instar des portions tronconiques en saillie (bombées), à la fois une grande luminosité assortie à un non- ensoleillement direct total en été et un ensoleillement maximal en hiver. On aboutit ainsi à un intérieur (I) frais et lumineux (surface vitrée) en été, car la façade vitrée est protégée d'une exposition directe au soleil (à l'ombre), et exposé du premier au dernier rayon de soleil en hiver (accueil optimal de l'ensoleillement hivernal).

En accord avec une première variante du deuxième mode de réalisation précité et comme le montrent notamment les figures 1 (dans le cas parties de troncs de cônes proches de portions de cônes entiers), au moins une partie de façade bombée (3') et au moins une partie de façade en creux (3) sont arrangées de manière superposée, en étant séparées par un plan horizontal (PH), ce plan contenant la ligne de base (6) de la partie de façade supérieure (3, 3') et la ligne sommitale (7) de la partie de façade inférieure (3, 3'). Dans la réalisation illustrée sur les figures 1, qui peut constituer un module de base pouvant être répété pour former une portion de façade (2), les deux parties de façade (3 et 3') se prolongent jusqu'au sommets de leurs troncs de cônes respectifs, ces sommets étant confondus et correspondant à un point fixe commun.

Comme le montrent les figures 1, cette superposition permet de définir deux surfaces triangulaires (4') dans le plan horizontal (PH), lesdits triangles étant de forme isocèle, symétriques par rapport au point fixe (PF) et reliés par leurs pointes au niveau dudit point. Ces deux surfaces triangulaires, dont les bords définissent une croix de Saint André, séparent les deux parties de façade (3 et 3 ') et peuvent par exemple correspondre à des zones d'une dalle (9) séparant deux étages et matérialisant physiquement ledit plan dans un immeuble à deux étages et deux portions de façade vitrées (2) correspondantes. Les côtés isocèles alignés des deux triangles définissent deux lignes droites en croix et correspondent respectivement aux lignes du soleil levant en été et du soleil couchant en hiver.

Dans le cadre de ce second mode de réalisation de l'invention, le point fixe se situe également en hauteur (pas au sol) et aussi bien les volumes de l'espace (forme bombée) que du contre-espace (forme en creux) sont exploités.

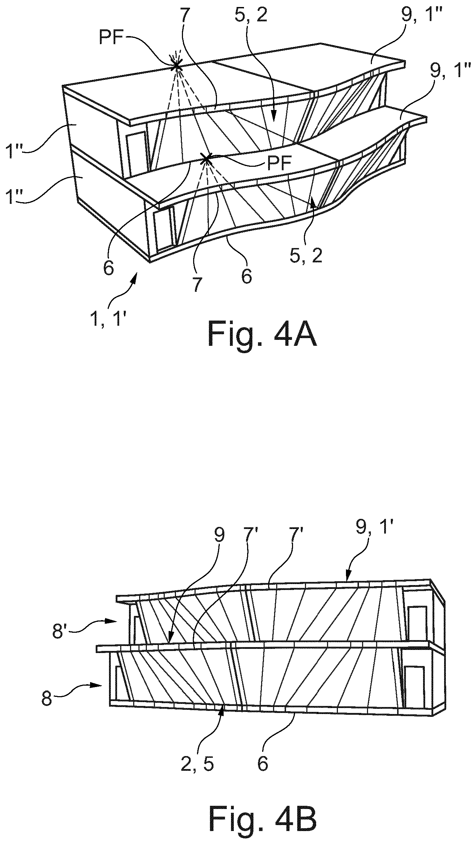

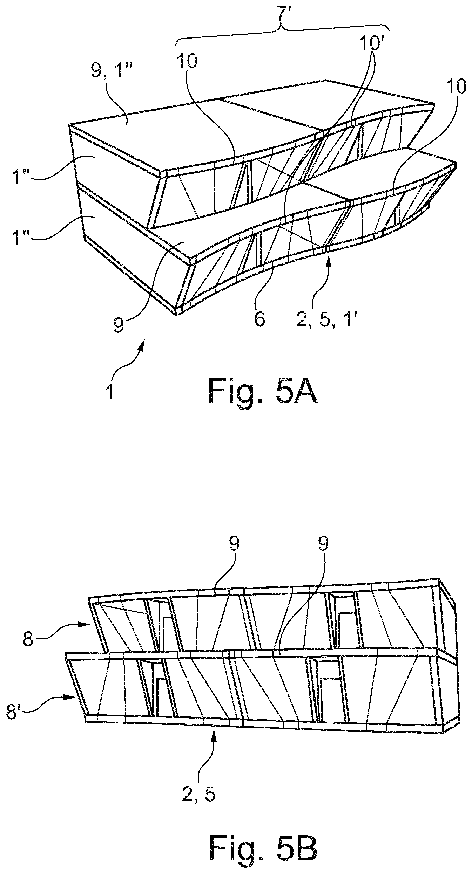

En accord avec une seconde variante de ce second mode de réalisation, aisément exploitable dans le contexte d'immeuble à plusieurs niveaux et présentant des baies vitrées de grandes dimensions transversales, illustrée à titre d'exemples sur les figures 4 et 5, au moins une partie de façade bombée (3') et au moins une partie de façade en creux (3) sont arrangées de manière contiguë horizontalement (ou transversalement), avec une continuité de leur ligne de base (6) et de leur ligne sommitale (7).

Selon une autre variante de réalisation avantageuse, ressortant des figures 2 à 5, la façade de la face (2') considérée dudit bâtiment (1) est subdivisée en au moins deux portions de façade (2) en forme de bandes superposées qui sont, d'une part, formées chacune par une succession d'au moins deux parties de façades (3, 3') comprenant au moins deux parties de façade en creux (3) et/ou au moins deux parties de façade bombée (3'), mutuellement contiguës horizontalement, et, d'autre part, séparées entre elles verticalement par un plan horizontal (PH), ce plan contenant la ligne de base (6) de la partie de façade supérieure (3, 3') et la ligne sommitale (7) de la partie de façade inférieure (3, 3').

A titre de réalisation avantageuse, chaque portion de façade (2) est formée d'une succession de parties de façade en creux (3) contiguës, le cas échéant se terminant à ses deux extrémités opposées par des parties de façades bombées (3'), et chaque portion de façade (2) correspond ou est associée à un étage du bâtiment (1) à plusieurs étages, les portions de façade (2) des étages supérieurs étant en retrait par rapport aux portions de façade (2) des étages inférieurs respectifs.

Conformément à l'invention, et comme le montrent schématiquement les figures 3, il peut être prévu que chaque portion de façade (2), en forme de bande et qui s'étend préférentiellement d'un seul tenant sur toute la largeur de la face (2') considérée du bâtiment (1), soit formée de trois parties constitutives contiguës et attenantes selon une direction sensiblement parallèle au côté concerné du bâtiment (1), à savoir, une partie centrale (5) et deux parties extrémales opposées, en ce qu'au moins une, préférentiellement chacune, des deux parties extrémales correspond à une partie (3') de façade bombée et en ce que la partie centrale (5) de la dite portion de façade (2) est constituée de plusieurs parties de façade en creux (3) qui se raccordent de manière continue entre elles et, le cas échéant, à la ou à chacune des deux parties de façade extrémales (3'), au niveau de l'arête sommitale (7), de la ligne de base (6) et au niveau de leurs surfaces extérieures respectives.

Plus précisément, la portion (7') de la ligne sommitale (7) associée à la partie de façade centrale (5) peut présenter, vue de dessus ou en projection sur le plan horizontal ou plan du sol (4), une extension sensiblement rectiligne, incurvée concave ou incurvée convexe entre les extrémités supérieures des portions (7") de la ligne sommitale (7) associées aux deux parties de façade extrémales bombées (3'), extrémités qu'elle relie entre elles (figures 3A à 3C).

En variante, et comme le montrent les figures 3D, 4 et 5, la portion (7') de la ligne sommitale (7) associée à la partie de façade centrale (5) présente, vue de dessus ou en projection sur le sol (4), une forme ondulée avec au moins un segment concave (10) et au moins un segment convexe (10'), et relie entre elles les extrémités supérieures des portions (7") de la ligne sommitale (7) associées aux deux parties de façade extrémales (3').

On peut noter que sur les figures 4 à 7, les parties de façades extrémales bombées (3'), éventuellement présentes ne sont pas représentées, les portions de façades (2) vitrées étant délimitées latéralement par des murs verticaux.

Il ressort par ailleurs des figures 4 à 6, que les différentes portions de façades vitrées (2) sont constituées de plaques ou de panneaux en verre de formes conjuguées et complémentaires permettant leur assemblage juxtaposé bord à bord et orientées chacune pour suivre au plus près la surface théorique résultant de l'application des principes constructifs de l'invention exposés dans la présente. Les traits pointillés de la figure 1A peuvent quant à eux délimités une configuration de plaques de verre élémentaires pour la réalisation de cette figure.

Préférentiellement et comme le montrent les figures 3A et 3B à titre d'exemples, les extrémités supérieures des portions (7") de la ligne sommitale (7) associées aux deux parties de façade extrémales (3') correspondent chacun au point culminant de la partie de tronc de cône respective par rapport au sol (4) - terrain ou dalle formant sol, les parties de tronc de cône correspondant respectivement aux deux parties de façade extrémales bombées (3') présentant éventuellement une amplitude angulaire similaire et complémentaire.

Conformément à une réalisation constructive pratique avantageuse, ressortant également des figures 2 à 6, le bâtiment (1) comprend au moins deux étages ou niveaux superposés (8, 8', 8", 8"') dont chacun comporte au moins une portion de façade (2) et qui sont séparés entre eux par une dalle (9) respective, la ou chaque dalle (9) séparant deux étages ou niveaux superposés correspondant au sol pour l'étage ou le niveau situé immédiatement au-dessus et à une partie du reste de l'enveloppe (1') pour le niveau ou l'étage situé immédiatement en-dessous. De plus, les lignes sommitales (7) de tous les niveaux ou étages superposés (8, 8', 8", 8"') sont de formes identiques, lesdites arêtes sommitales (7) étant soit toutes superposées de manière coïncidente verticalement, soit à chaque fois décalées vers l'arrière ou en retrait par rapport à la ligne sommitale (7) immédiatement inférieure.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention défini par les revendications.

## Revendications

1. Bâtiment (1), notamment bâtiment d'habitation ou recevant du public, dont l'enveloppe (1') comprend au moins une portion de façade (2), préférentiellement une façade entière, qui délimite un extérieur (E) et un intérieur (I), qui est transparente au rayonnement solaire, sensiblement sur toute sa surface, et qui est située sur une face (2') dudit bâtiment (1) orientée du côté sud lorsque ledit bâtiment est localisé dans l'hémisphère nord et inversement orientée du côté nord dudit bâtiment (1) lorsque ce dernier est localisé dans l'hémisphère sud, la forme d'au moins une partie (3, 3') de ladite au moins une portion de façade (2) s'inscrivant sensiblement dans la surface conique générée par un segment imaginaire s'étendant entre le Soleil et un point (PF) correspondant qui est fixe par rapport à la Terre, lors d'un tour complet de la Terre sur elle-même,
ladite ou chaque portion de façade (2) s'étendant entre une ligne de base (6) et une ligne ou arête (7) sommitale qui la délimitent par rapport à la partie restante (1") de l'enveloppe (1') du bâtiment (1), cette partie restante (1") étant majoritairement ou totalement opaque,
bâtiment (1) **caractérisé en ce que** la face extérieure de ladite ou de chaque partie (3, 3') précitée de portion de façade ou façade (2) s'inscrit approximativement dans la surface d'une partie d'un tronc de cône, faisant partie de la surface conique générée par le segment imaginaire précité, qui est située sous le plan horizontal contenant le point fixe (PF) associé et dont le sommet imaginaire est ledit point fixe (PF), lequel est situé au-dessus de l'arête sommitale (7) de la partie (3, 3') de portion de façade (2) concernée, **en ce que** la face extérieure de chaque partie (3, 3') précitée de la portion de façade (2) est, en chaque point de l'arête sommitale (7), située en retrait et inclinée vers l'intérieur (I) par rapport à une droite perpendiculaire au plan horizontal (PH) local, c'est-à-dire une droite normalement perpendiculaire au plan du sol (4), et passant par ce point de l'arête sommitale (7), et **en ce que** l'une (3) au moins des parties de façade précitées (3, 3') formant la portion de façade (2) s'inscrit dans la surface d'une partie de tronc de cône précitée qui est en creux ou concave par rapport à la face considérée (2') vue depuis l'extérieur (E).

2. Bâtiment selon la revendication 1, **caractérisé en ce qu'**au moins une autre (3') des parties de façade précitées (3, 3') s'inscrit dans la surface d'une partie de tronc de cône bombée ou convexe par rapport à la face considérée (2') vue depuis l'extérieur (E).

3. Bâtiment selon la revendication 2, **caractérisé en ce qu'**au moins une partie de façade bombée (3') et au moins une partie de façade en creux (3) sont arrangées de manière superposée, en étant séparées par un plan horizontal (PH), ce plan contenant la ligne de base (6) de la partie de façade supérieure (3, 3') et la ligne sommitale (7) de la partie de façade inférieure (3, 3').

4. Bâtiment selon la revendication 2, **caractérisé en ce qu'**au moins une partie de façade bombée (3') et au moins une partie de façade en creux (3) sont arrangées de manière contiguë horizontalement, avec une continuité de leur ligne de base (6) et de leur ligne sommitale (7).

5. Bâtiment selon l'une quelconque des revendications 1 à 4, **caractérisé en ce que** la façade de la face (2') considérée dudit bâtiment (1) est subdivisée en au moins deux portions de façade (2) en forme de bandes superposées qui sont, d'une part, formées chacune par une succession d'au moins deux parties de façades (3, 3') comprenant au moins deux parties de façade en creux (3) et/ou au moins deux parties de façade bombées (3'), mutuellement contiguës horizontalement, et, d'autre part, séparées entre elles verticalement par un plan horizontal (PH), ce plan contenant la ligne de base (6) de la partie de façade supérieure (3, 3') et la ligne sommitale (7) de la partie de façade inférieure (3, 3').

6. Bâtiment selon la revendication 5, **caractérisé en ce que** chaque portion de façade (2) est formée d'une succession de parties de façade en creux (3) contiguës, le cas échéant se terminant à ses deux extrémités opposées par des parties de façades bombées (3'), et **en ce que** chaque portion de façade (2) correspond ou est associée à un étage du bâtiment (1) à plusieurs étages, les portions de façade (2) des étages supérieurs étant en retrait par rapport aux portions de façade (2) des étages inférieurs respectifs.

7. Bâtiment selon l'une quelconque des revendications 5 et 6, **caractérisé en ce que** chaque portion de façade (2), en forme de bande et qui s'étend préférentiellement d'un seul tenant sur toute la largeur de la face (2') considérée du bâtiment (1), est formée de trois parties constitutives contiguës et attenantes selon une direction sensiblement parallèle au côté concerné du bâtiment (1), à savoir une partie centrale (5) et deux parties extrémales opposées, **en ce qu'**au moins une, préférentiellement chacune, des deux parties extrémales correspond à une partie (3') de façade bombée et **en ce que** la partie centrale (5) de la dite portion de façade (2) est constituée de plusieurs parties de façade en creux (3) qui se raccordent de manière continue entre elles et, le cas échéant, à la ou à chacune des deux parties de façade extrémales (3'), au niveau de l'arête sommitale (7), de la ligne de base (6) et au niveau de leurs surfaces extérieures respectives.

8. Bâtiment selon la revendication 7, **caractérisé en ce que** la portion (7') de la ligne sommitale (7) associée à la partie de façade centrale (5) présente, vue de dessus ou en projection sur le plan horizontal ou plan du sol (4), une extension sensiblement rectiligne, incurvée concave ou incurvée convexe entre les extrémités supérieures des portions (7") de la ligne sommitale (7) associées aux deux parties de façade extrémales bombées (3'), extrémités qu'elle relie entre elles.

9. Bâtiment selon la revendication 7, **caractérisé en ce que** la portion (7') de la ligne sommitale (7) associée à la partie de façade centrale (5) présente, vue de dessus ou en projection sur le sol (4), une forme ondulée avec au moins un segment concave (10) et au moins un segment convexe (10'), et relie entre elles les extrémités supérieures des portions (7") de la ligne sommitale (7) associées aux deux parties de façade extrémales (3').

10. Bâtiment selon l'une quelconque des revendications 7 à 9, **caractérisé en ce que** les extrémités supérieures des portions (7") de la ligne sommitale (7) associées aux deux parties de façade extrémales (3') correspondent chacun au point culminant de la partie de tronc de cône respective par rapport au sol (4), les parties de tronc de cône correspondant respectivement aux deux parties de façade extrémales bombées (3') présentant éventuellement une amplitude angulaire similaire et complémentaire.

11. Bâtiment selon l'une quelconque des revendications 1 à 10, **caractérisé en ce qu'**il comprend au moins deux étages ou niveaux superposés (8, 8', 8", 8"') dont chacun comporte au moins une portion de façade (2) et qui sont séparés entre eux par une dalle (9) respective, la ou chaque dalle (9) séparant deux étages ou niveaux superposés correspondant au sol pour l'étage ou le niveau situé immédiatement au-dessus et à une partie du reste de l'enveloppe (1') pour le niveau ou l'étage situé immédiatement en-dessous, et **en ce que** les lignes sommitales (7) de tous les niveaux ou étages superposés (8, 8', 8", 8"') sont de formes identiques, lesdites arêtes sommitales (7) étant soit toutes superposées de manière coïncidente verticalement, soit à chaque fois décalées vers l'arrière ou en retrait par rapport à la ligne sommitale (7) immédiatement inférieure.

## Patentansprüche

1. Gebäude (1), insbesondere Wohngebäude oder öffentliches Gebäude, dessen Hülle (1') mindestens einen Fassadenabschnitt (2), vorzugsweise eine ganze Fassade, aufweist, der einen Außenbereich (E) und einen Innenbereich (I) abgrenzt, der im Wesentlichen über seine gesamte Fläche für Sonnenstrahlung transparent ist, und der an einer zur Südseite hin ausgerichteten Seitenfläche (2') des Gebäudes (1) liegt, wenn sich das Gebäude in der nördlichen Hemisphäre befindet, und umgekehrt zur Nordseite des Gebäudes (1) hin ausgerichtet ist, wenn sich das Gebäude in der südlichen Hemisphäre befindet, wobei die Form von mindestens einem Teil (3, 3') des mindestens einen Fassadenabschnitts (2) im Wesentlichen der konischen Fläche folgt, die durch ein imaginäres Segment erzeugt wird, das sich zwischen der Sonne und einem entsprechenden Punkt (PF) erstreckt, der in Bezug auf die Erde bei einer vollständigen Drehung der Erde um sich selbst ortsfest ist,
wobei sich der oder jeder Fassadenabschnitt (2) zwischen einer Grundlinie (6) und einer Scheitellinie oder -kante (7) erstreckt, die ihn in Bezug auf den verbleibenden Teil (1") der Hülle (1') des Gebäudes (1) begrenzen, wobei dieser verbleibende Teil (1") überwiegend oder vollständig lichtundurchlässig ist,
wobei das Gebäude (1), **dadurch gekennzeichnet ist, dass** die Außenseitenfläche des oder jedes oben genannten Teils (3, 3') eines Fassadenabschnitts oder einer Fassade (2) annähernd der Fläche eines Teils eines Kegelstumpfs folgt, der Teil der durch das oben genannte imaginäre Segment erzeugten konischen Oberfläche ist, die unter der den zugeordneten ortsfesten Punkt (PF) enthaltenden horizontalen Ebene liegt und deren imaginärer Scheitelpunkt der ortsfeste Punkt (PF) ist, welcher oberhalb der Scheitelkante (7) des betreffenden Teils (3, 3') des Fassadenabschnitts (2) liegt, dass die Außenseitenfläche jedes oben genannten Teils (3, 3') des Fassadenabschnitts (2) an jedem Punkt der Scheitelkante (7) in Bezug auf eine Gerade, die zur örtlichen Horizontalebene (PH) senkrecht ist, d.h. eine normalerweise zur Bodenebene (4) senkrechte Gerade, und durch diesen Punkt der Scheitelkante (7) verläuft, zurückgesetzt liegt und zum Innenbereich (I) hin geneigt ist, und dass mindestens einer (3) der den Fassadenabschnitt (2) bildenden oben genannten Fassadenteile (3, 3') der Fläche eines oben genannten Kegelstumpfteils folgt, der in Bezug auf die von der Außenseite (E) gesehene betrachtete Seitenfläche (2') ausgehöhlt oder konkav ist.

2. Gebäude nach Anspruch 1, **dadurch gekennzeichnet, dass** mindestens ein anderer (3') der oben genannten Fassadenteile (3, 3') in Bezug auf die von der Außenseite (E) gesehene betrachtete Seitenfläche (2') der Fläche eines gewölbten oder konvexen Kegelstumpfteils folgt.

3. Gebäude nach Anspruch 2, **dadurch gekennzeichnet, dass** mindestens ein gewölbtes Fassadenteil (3') und mindestens ein ausgehöhltes Fassadenteil (3) übereinanderliegend angeordnet sind, indem sie durch eine horizontale Ebene (PH) getrennt sind, wobei diese Ebene die Grundlinie (6) des oberen Fassadenteils (3, 3') und die Scheitellinie (7) des unteren Fassadenteils (3, 3') enthält.

4. Gebäude nach Anspruch 2, **dadurch gekennzeichnet, dass** mindestens ein gewölbtes Fassadenteil (3') und mindestens ein ausgehöhltes Fassadenteil (3) horizontal benachbart mit einer Stetigkeit ihrer Grundlinie (6) und ihrer Scheitellinie (7) angeordnet sind.

5. Gebäude nach einem der Ansprüche 1 bis 4, **dadurch gekennzeichnet, dass** die Fassade der betrachteten Seitenfläche (2') des Gebäudes (1) in mindestens zwei streifenförmige, übereinanderliegende Fassadenabschnitte (2) unterteilt ist, die einerseits jeweils durch eine Folge von mindestens zwei Fassadenteilen (3, 3') gebildet werden, die mindestens zwei ausgehöhlte Fassadenteile (3) und/oder mindestens zwei gewölbte Fassadenteile (3') aufweisen, die horizontal zueinander benachbart sind, und die andererseits vertikal durch eine horizontale Ebene (PH) voneinander getrennt sind, wobei diese Ebene die Grundlinie (6) des oberen Fassadenteils (3, 3') und die Scheitellinie (7) des unteren Fassadenteils (3, 3') enthält.

6. Gebäude nach Anspruch 5, **dadurch gekennzeichnet, dass** jeder Fassadenabschnitt (2) aus einer Folge von benachbarten, ausgehöhlten Fassadenteilen (3) besteht, die gegebenenfalls an ihren beiden gegenüberliegenden Enden mit gewölbten Fassadenteilen (3') enden, und dass jeder Fassadenabschnitt (2) einer Etage des mehretagigen Gebäudes (1) entspricht oder diesem zugeordnet ist, wobei die Fassadenabschnitte (2) der oberen Etagen in Bezug auf die Fassadenabschnitte (2) der jeweiligen unteren Etagen zurückgesetzt sind.

7. Gebäude nach einem der Ansprüche 5 und 6, **dadurch gekennzeichnet, dass** jeder streifenförmige Fassadenabschnitt (2), der sich vorzugsweise in einem Stück über die gesamte Breite der betrachteten Seitenfläche (2') des Gebäudes (1) erstreckt, aus drei gemäß einer Richtung im Wesentlichen parallel zu der betreffenden Seite des Gebäudes (1) benachbarten und angrenzenden Bestandteilen gebildet ist, nämlich einem Mittelteil (5) und zwei gegenüberliegenden Endteilen, dass mindestens einer, vorzugsweise jeder, der zwei Endteile einem gewölbten Fassadenteil (3') entspricht und dass des Mittelteil (5) des Fassadenabschnitts (2) aus mehreren ausgehöhlten Fassadenteilen (3) besteht, die kontinuierlich miteinander und gegebenenfalls mit dem oder jedem der zwei äußersten Fassadenteile (3') auf Höhe der Scheitelkante (7), der Grundlinie (6) und auf Höhe ihrer jeweiligen Außenflächen verbunden sind.

8. Gebäude nach Anspruch 7, **dadurch gekennzeichnet, dass** der Abschnitt (7') der dem mittleren Fassadenteil (5) zugeordneten Scheitellinie (7) in der Draufsicht oder Projektion auf die horizontale Ebene oder Bodenebene (4) eine im Wesentlichen geradlinige, konkav gekrümmte oder konvex gekrümmte Erstreckung zwischen den oberen, den zwei gewölbten äußersten Fassadenteilen (3') zugeordneten Enden der Abschnitte (7") der Scheitellinie (7) aufweist, welche Enden sie miteinander verbindet.

9. Gebäude nach Anspruch 7, **dadurch gekennzeichnet, dass** der Abschnitt (7') der dem zentralen Fassadenteil (5) zugeordneten Scheitellinie (7) in der Draufsicht oder Projektion auf den Boden (4) eine Wellenform mit mindestens einem konkaven Segment (10) und mindestens einem konvexen Segment (10') aufweist und die oberen Enden der den zwei äußeren Fassadenteilen (3') zugeordneten Abschnitten (7") der Scheitellinie (7) miteinander verbindet.

10. Gebäude nach einem der Ansprüche 7 bis 9, **dadurch gekennzeichnet, dass** die oberen Enden der den zwei äußersten Fassadenteilen (3') zugeordneten Abschnitte (7") der Scheitellinie (7) jeweils dem Kulminationspunkt des jeweiligen Kegelstumpfteils in Bezug auf den Boden (4) entsprechen, wobei die jeweils den zwei gewölbten äußersten Fassadenteilen (3') entsprechenden Kegelstumpfteile möglicherweise eine ähnliche und komplementäre Winkelamplitude aufweisen.

11. Gebäude nach einem der Ansprüche 1 bis 10, **dadurch gekennzeichnet, dass** es mindestens zwei übereinanderliegende Etagen oder Ebenen (8, 8', 8", 8‴) aufweist, von denen jede mindestens einen Fassadenabschnitt (2) umfasst und die durch eine jeweilige Platte (9) voneinander getrennt sind, wobei die oder jede zwei übereinanderliegende Etagen oder Ebenen trennende Platte (9) dem Boden für die unmittelbar darüber gelegene Etage oder Ebene und einem Teil des Rests der Hülle (1') für die unmittelbar darunter gelegene Etage oder Ebene entspricht, und dass die Scheitellinien (7) aller übereinanderliegenden Ebenen oder Etagen (8, 8', 8", 8‴) von identischer Form sind, wobei die Scheitelkanten (7) entweder alle vertikal deckungsgleich übereinanderliegen oder jedes Mal in Bezug auf die unmittelbar tieferliegende Scheitellinie (7) nach hinten versetzt oder zurückgesetzt sind.

## Claims

1. Building (1), notably a residential building or one receiving the public, the outer envelope (1') of which comprises at least one facade portion (2), preferentially an entire facade, which delimits an outside (E) and an inside (I), which is transparent to the solar radiation, substantially over its entire surface, and which is situated on a face (2') of said building (1) oriented on the south side when said building is located in the northern hemisphere and, conversely oriented on the north side of said building (1) when the latter is located in the southern hemisphere, the form of at least a part (3, 3') of said at least one facade portion (2) being inscribed substantially within the conical surface generated by an imaginary segment extending between the Sun and a corresponding point (PF) which is fixed with respect to the Earth, upon a complete rotation of the Earth on itself,
said or each facade portion (2) extending between a base line (6) and a top line or edge (7) which delimit it with respect to the remaining part (1") of the outer envelope (1') of the building (1), this remaining part (1") being mostly or totally opaque,
building (1) **characterized in that** the outer face of said or each abovementioned part (3, 3') of facade portion or facade (2) is inscribed approximately within the surface of a part of a frustum, forming part of the conical surface generated by the abovementioned imaginary segment, which is situated under the horizontal plane containing the associated fixed point (PF) and of which the imaginary top is said fixed point (PF), which is situated above the top edge (7) of the part (3, 3') of facade portion (2) concerned, **in that** the outer face of each abovementioned part (3, 3') of the facade portion (2) is, at each point of the top edge (7), situated set back and inclined inward (I) with respect to a straight line perpendicular to the local horizontal plane (PH), that is to say a straight line normally perpendicular to the plane of the ground (4), and passing through this point of the top edge (7), and **in that** at least one (3) of the abovementioned facade parts (3, 3') forming the facade portion (2) is inscribed within the surface of an abovementioned frustum part which is recessed or concave with respect to the face considered (2') seen from the outside (E).

2. Building according to Claim 1, **characterized in that** at least one other (3') of the abovementioned facade parts (3, 3') is inscribed within the surface of a frustum part that is domed or convex with respect to the face considered (2') seen from the outside (E).

3. Building according to Claim 2, **characterized in that** at least one domed facade part (3') and at least one recessed facade part (3) are arranged in a superposed manner, by being separated by a horizontal plane (PH), this plane containing the base line (6) of the upper facade part (3, 3') and the top line (7) of the lower facade part (3, 3').

4. Building according to Claim 2, **characterized in that** at least one domed facade part (3') and at least one recessed facade part (3) are arranged horizontally contiguously, with a continuity of their base line (6) and of their top line (7).

5. Building according to any one of Claims 1 to 4, **characterized in that** the facade of the face (2') considered of said building (1) is subdivided into at least two facade portions (2) in the form of superposed bands which are, on the one hand, each formed by a succession of at least two facade parts (3, 3') comprising at least two recessed facade parts (3) and/or at least two domed facade parts (3'), horizontally mutually contiguous, and, on the other hand, separated from one another vertically by a horizontal plane (PH), this plane containing the base line (6) of the upper facade part (3, 3') and the top line (7) of the lower facade part (3, 3').

6. Building according to Claim 5, **characterized in that** each facade portion (2) is formed by a succession of contiguous recessed facade parts (3), if necessary being terminated at its two opposite ends by domed facade parts (3'), and **in that** each facade portion (2) corresponds to or is associated with a floor of the building (1) with multiple floors, the facade portions (2) of the upper floors being set back with respect to the facade portions (2) of the respective lower floors.

7. Building according to either one of Claims 5 and 6, **characterized in that** each facade portion (2), in band form and which extends preferentially in a single piece over the entire width of the face (2') considered of the building (1), is formed by three constituent parts that are contiguous and adjacent in a direction substantially parallel to the side concerned of the building (1), namely a central part (5) and two opposite end parts, **in that** at least one, preferentially each, of the two end parts corresponds to a domed facade part (3'), and **in that** the central part (5) of said facade portion (2) is composed of several recessed facade parts (3) which are connected continuously together and, if appropriate, to the or each of the two end facade parts (3'), at the top edge (7), the base line (6) and on their respective outer surfaces.

8. Building according to Claim 7, **characterized in that** the portion (7') of the top line (7) associated with the central facade part (5) has, seen from above or in projection on the horizontal plane or plane of the ground (4), an extension that is substantially rectilinear, concave dished or convex dished between the top ends of the portions (7") of the top line (7) associated with the two domed end facade parts (3'), ends that it links together.

9. Building according to Claim 7, **characterized in that** the portion (7') of the top line (7) associated with the central facade part (5) has, seen from above or in projection on the ground (4), a corrugated form with at least one concave segment (10) and at least one convex segment (10'), and links together the top ends of the portions (7") of the top line (7) associated with the two end facade parts (3').

10. Building according to any one of Claims 7 to 9, **characterized in that** the top ends of the portions (7") of the top line (7) associated with the two end facade parts (3') each correspond to the culminating point of the respective frustum part with respect to the ground (4), the frustum parts respectively corresponding to the two domed end facade parts (3') possibly having a similar and complementary angular amplitude.

11. Building according to any one of Claims 1 to 10, **characterized in that** it comprises at least two superposed floors or levels (8, 8', 8", 8‴) each of which comprises at least one facade portion (2) and which are separated from one another by a respective slab (9), the or each slab (9) separating two superposed floors or levels corresponding to the ground for the floor or level situated immediately above and to a part of the remainder of the outer envelope (1') for the level or floor situated immediately below, and **in that** the top lines (7) of all the superposed levels or floors (8, 8', 8", 8‴) are of identical forms, said top edges (7) being either all superposed in a vertically coincident manner, or each time offset towards the rear or set back with respect to the immediately lower top line (7).
